(19) Europäisches Patentamt / European Patent Office / Office européen des brevets

(11) **EP 4 645 837 A1**

(12) **EUROPEAN PATENT APPLICATION**
published in accordance with Art. 153(4) EPC

(43) Date of publication:
**05.11.2025 Bulletin 2025/45**

(21) Application number: 23922460.3

(22) Date of filing: 06.12.2023

(51) International Patent Classification (IPC):
*H04M 1/02* (2006.01)    *H04R 1/08* (2006.01)
*G06F 1/16* (2006.01)    *H04R 9/02* (2006.01)
*H04R 9/08* (2006.01)    *H04M 1/03* (2006.01)

(86) International application number:
**PCT/CN2023/136785**

(87) International publication number:
**WO 2024/169344 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.02.2023 CN 202310148440**

(71) Applicant: **Honor Device Co., Ltd.
Shenzhen, Guangdong 518040 (CN)**

(72) Inventors:
• **WANG, Liang**
  **Shenzhen, Guangdong 518040 (CN)**
• **LI, Ting**
  **Shenzhen, Guangdong 518040 (CN)**

(74) Representative: **Gill Jennings & Every LLP
The Broadgate Tower
20 Primrose Street
London EC2A 2ES (GB)**

(54) **ELECTRONIC DEVICE**

(57) This application provides an electronic device, and relates to the field of electronic technologies, to implement further thinning of the electronic device, thereby improving portability and tactile experience of the electronic device. The electronic device includes a housing, a circuit board, a sealing hood, and a microphone. An inner wall surface of the housing includes a stepped surface, a first through hole is disposed on the housing, an end opening that is of the first through hole and that is communicated with an inner side of the housing is a first opening, and the first opening is located on the stepped surface. The circuit board is fastened to the stepped surface. The circuit board includes a first surface and a second surface, the first surface faces the stepped surface, and the second surface faces away from the stepped surface. A second through hole and a third through hole are disposed on the circuit board, and the second through hole is opposite to and communicated with the first opening. The sealing hood is located on a side that the second surface faces, the sealing hood and the circuit board enclose an air flow cavity, and the air flow cavity is communicated with the second through hole and the third through hole. The microphone is located on a side that the first surface faces, the microphone has a sound pickup hole, and the sound pickup hole is opposite to and communicated with the third through hole.

FIG. 8

## Description

This application claims priority to Chinese Patent Application No. 202310148440.0, filed with the China National Intellectual Property Administration on February 13, 2023 and entitled "ELECTRONIC DEVICE", which is incorporated herein by reference in its entirety.

## TECHNICAL FIELD

This application relates to the field of electronic technologies, and in particular, to an electronic device.

## BACKGROUND

There is a microphone (microphone, MIC) in electronic devices such as a mobile phone, a tablet computer, a laptop computer, a large-screen display device, and a smart wearable device. The microphone is also referred to as a microphone head, a microphone core, a mic, a receiver, or a mike. In contrast to a loudspeaker, the microphone is an energy conversion device that converts a sound signal into an electrical signal. Specifically, the loudspeaker is used for sound output, and the microphone is used for sound input.

The microphone includes a protective housing and a structure such as a sound pickup, a signal amplification circuit, a power supply circuit, or a battery that is disposed in the protective housing. The microphone has many composition structures, which makes it difficult to further reduce a volume. However, for an electronic device (in particular, a foldable mobile phone) on which a microphone is disposed, to further improve portability and tactile experience of the electronic device, the electronic device needs to be further thinned. Based on this, how to arrange a microphone in an electronic device to further thin the electronic device is an important studying direction for manufacturers.

## SUMMARY

This application provides an electronic device, to implement further thinning of the electronic device, thereby improving portability and tactile experience of the electronic device.

To achieve the foregoing objective, this application provides an electronic device. The electronic device includes a housing, a circuit board, a sealing hood, and a microphone.

An inner wall surface of the housing includes a stepped surface, a first through hole is disposed on the housing, the first through hole is communicated with an inner side and an outer side of the housing, an end opening that is of the first through hole and that is communicated with the inner side of the housing is a first opening, and the first opening is located on the stepped surface.

The circuit board is located in the housing and is fastened to the stepped surface. The circuit board includes a first surface and a second surface that face away from each other, the first surface faces the stepped surface, and the second surface faces away from the stepped surface. A second through hole and a third through hole are disposed on the circuit board, the second through hole is opposite to and communicated with the first opening, and the third through hole is spaced apart from the second through hole.

The sealing hood is located on a side that the second surface faces, the sealing hood and the circuit board enclose an air flow cavity, and the air flow cavity is communicated with the second through hole and the third through hole.

The microphone is located on a side that the first surface faces, the microphone has a sound pickup hole, and the sound pickup hole is opposite to and communicated with the third through hole.

In this way, the first through hole, the second through hole, the air flow cavity, and the third through hole form a U-shaped sound pickup pipe, and a sound signal outside the electronic device can be transmitted to the microphone through the U-shaped sound pickup pipe, to convert the sound signal into an electrical signal by using the microphone. In addition, in a direction perpendicular to the circuit board, a stack height of a part that is of the electronic device and that is located on a side that the stepped surface faces is approximately a sum of a thickness of the circuit board, a height of the sealing hood, and a thickness of a first back cover. A structure of the sealing hood is simple, and the height of the sealing hood may be reduced, so that the stack height of this part of the electronic device can be reduced, thereby helping to reduce an overall thickness of the electronic device, and improving portability and tactile experience of the electronic device.

In addition, the microphone and the sealing hood are respectively disposed on two opposite sides of the circuit board, to reduce stress of a part that is of the circuit board and that is configured to fasten the microphone. In addition, the U-shaped sound pickup pipe may reduce an impact of an acoustic wave air flow on a diaphragm in the microphone.

In a possible implementation, a height of the sealing hood is less than a height of the microphone in a direction perpendicular to the circuit board. In this way, the stack height of the part that is of the electronic device and that is located on the side that the stepped surface faces can be reduced. Specifically, a benefit value of the stack height is approximately a difference between the height of the microphone and the height of the sealing hood, thereby helping to reduce the overall thickness of the electronic device, and improving portability and tactile experience of the electronic device.

In a possible implementation, the height of the sealing hood is greater than or equal to 0.4 millimeter and less than or equal to 0.9 millimeter in the direction perpendicular to the circuit board. Specifically, the height of the sealing hood may be 0.4 millimeter, 0.5 millimeter, 0.6 millimeter, 0.7 millimeter, 0.8 millimeter, or 0.9 millimeter. In this way, the height of the shielding hood is moderate, so that the overall thickness can be reduced. In addition, a height of the air flow cavity in the direction perpendicular to the circuit board may be designed to be large, to increase a cross-sectional area of the U-shaped sound pickup pipe at a position of the air flow cavity, thereby helping to increase a peak frequency of the microphone.

In a possible implementation, a wall thickness of the sealing hood is greater than or equal to 0.08 millimeter and less than or equal to 0.3 millimeter. Specifically, the wall thickness of the sealing hood may be 0.08 millimeter, 0.1 millimeter, 0.15 millimeter, 0.18 millimeter, 0.2 millimeter, 0.25 millimeter, 0.28 millimeter, or 0.3 millimeter. In this way, structural strength of the sealing hood can be ensured. In addition, the height of the air flow cavity inside the sealing hood may be designed to be large in the direction perpendicular to the circuit board on the premise that the height of the sealing hood is fixed, thereby helping to increase the peak frequency of the microphone.

In a possible implementation, a volume of the air flow cavity is greater than or equal to 3 cubic millimeters and less than or equal to 10 cubic millimeters. Specifically, the volume of the air flow cavity may be 3 cubic millimeters, 4 cubic millimeters, 5 cubic millimeters, 6 cubic millimeters, 7 cubic millimeters, 8 cubic millimeters, 9 cubic millimeters, or 10 cubic millimeters. In this way, the volume of the air flow cavity is moderate. The second through hole and the third through hole can be simultaneously covered on the premise that the height of the air flow cavity is fixed. In addition, the volume of the air flow cavity is relatively small, so that a volume of the U-shaped sound pickup pipe is small, thereby helping to increase the peak frequency of the microphone.

In a possible implementation, a material of the sealing hood is metal. Specifically, the metal includes but is not limited to iron, iron alloy, copper, copper alloy, aluminum, or aluminum alloy. The metal has large hardness, so that the wall thickness of the sealing hood can be reduced on the premise that the structural strength of the sealing hood is ensured. In this way, the height of the sealing hood can be reduced on the premise that the height of the air flow cavity is fixed, thereby facilitating thinning of the electronic device; or the height of the air flow cavity can be increased on the premise that the height of the sealing hood is fixed, thereby helping to increase the peak frequency of the microphone.

In a possible implementation, the sealing hood includes a bottom plate, a side plate, and an annular connecting plate. The side plate is disposed around an edge periphery of the bottom plate, and the annular connecting plate is connected to an edge periphery that is of the side plate and that is away from the bottom plate. An annular connecting pad is disposed on the second surface, and the annular connecting plate is welded to the annular connecting pad. In this way, the sealing hood is fixedly connected to the circuit board through welding, and connection stability is high. In addition, a periphery of the annular connecting plate can be welded to a periphery of the annular connecting pad, to implement sealing to some extent. In addition, the first through hole and the second through hole may balance an air pressure in the air flow cavity and an air pressure outside the electronic device, to avoid loose weld of the sealing hood caused by heating air in the air flow cavity in a process of welding the sealing hood to the circuit board.

In a possible implementation, the annular connecting plate may be welded to the annular connecting pad by using a surface mounted technology. In this way, welding efficiency can be improved and assembly costs can be reduced.

In a possible implementation, one end that is of the side plate and that is away from the bottom plate is an opening end, the annular connecting plate is located at a periphery of the opening end, the annular connecting plate includes an inner edge, and the inner edge is connected to the opening end. In this way, the structure of the sealing hood is simple and is easy to form through stamping.

In a possible implementation, the annular connecting plate further includes an outer edge, a first sealing material is disposed on one side that is of the outer edge and that is away from the inner edge, and the first sealing material is in contact with the outer edge and the circuit board. Specifically, the first sealing material includes but is not limited to a sealant and a sealing tape. The sealant may be dispensed. In this way, the sealing hood can be subjected to secondary sealing and reinforcement by using the first sealing material, to avoid leakage of air at a welded part between the sealing hood and the circuit board when the entire electronic device falls off.

In a possible implementation, the second through hole and the second through hole are circular holes, and a diameter of the second through hole is greater than a diameter of the third through hole. In this way, the diameter of the second through hole is large, and a cross-sectional area of the U-shaped sound pickup pipe at the second through hole is large, thereby helping to increase the peak frequency of the microphone.

In a possible implementation, the diameter of the second through hole is greater than or equal to 0.5 millimeter and less than or equal to 1.5 millimeters. Specifically, the diameter of the second through hole may be 0.5 millimeter, 0.6 millimeter, 0.7 millimeter, 0.8 millimeter, 0.9 millimeter, 1.0 millimeter, 1.1 millimeters, 1.2 millimeters, 1.3 millimeters, 1.4 millimeters, or 1.5 millimeters. In this way, the diameter of the second through hole is moderate, and a cross-sectional area of an air flow channel is large. In addition, because the sealing hood covers the second through hole, the diameter of the second through hole further affects an area occupied by the sealing hood on the circuit board, thus affecting the volume of the air flow cavity in the sealing hood. When the diameter of the second through hole is within this range, the diameter of the second through hole is moderate, the area occupied by the sealing hood on the circuit board is moderate, and the volume of the air flow cavity in the sealing hood is moderate, thereby helping to increase the peak frequency of the microphone.

In a possible implementation, a distance between a center of the second through hole and a center of the third through hole is greater than or equal to 2 millimeters and less than or equal to 5 millimeters. Specifically, the distance between the center of the second through hole and the center of the third through hole may be 2 millimeters, 3 millimeters, 4 millimeters, or 5 millimeters. In this way, a distance between the second through hole and the third through hole is moderate, and air tightness of a connection part between the stepped surface and the circuit board and the volume of the air flow cavity can be considered at the same time, thereby helping to increase the peak frequency of the microphone.

In a possible implementation, the side plate includes a first arcuate side plate, a second arcuate side plate, a first transition plate, and a second transition plate; The first arcuate side plate is located on one side that is of the second through hole and that is away from the third through hole, and extends in a circumferential direction of the second through hole. The second arcuate side plate is located on one side that is of the third through hole and that is away from the second through hole, and extends in a circumferential direction of the third through hole. A radius of the first arcuate side plate is greater than a radius of the second arcuate side plate. Two ends of the first arcuate side plate in the circumferential direction of the second through hole are respectively a first end and a second end, and two ends of the second arcuate side plate in the circumferential direction of the third through hole are respectively a third end and a fourth end. A plane that passes through the center of the second through hole and the center of the third through hole and that is perpendicular to the circuit board is defined as a reference plane, the first end and the third end are located on one side of the reference plane, and the second end and the fourth end are located on the other side of the reference plane. The first transition plate is connected between the first end and the third end, and the second transition plate is connected between the second end and the fourth end. In this way, a shape of the sealing hood is approximately a spindle shape, an internal space at one end of the spindle-shaped structure is large, and an internal space at the other end of the spindle-shaped structure is small. The end with the large internal space is communicated with the second through hole with the large diameter, and the end with the small internal space is communicated with the third through hole with the small diameter, thereby implementing a reasonable layout, reducing the volume of the air flow cavity in the sealing hood, and helping to increase the peak frequency of the microphone.

In a possible implementation, the first transition plate and the second transition plate are flat plates, an extension path of the first transition plate from the first end to the third end is a first extension path, and the first extension path is tangent to an extension path of the first arcuate side plate in the circumferential direction of the second through hole and an extension path of the second arcuate side plate in the circumferential direction of the third through hole. An extension path of the second transition plate from the second end to the fourth end is a second extension path, and the second extension path is tangent to the extension path of the first arcuate side plate in the circumferential direction of the second through hole and the extension path of the second arcuate side plate in the circumferential direction of the third through hole. In this way, the side plate has a simple structure and is easy to process, thereby helping to reduce costs.

In a possible implementation, a center line corresponding to the first arcuate side plate is collinear with a center line of the second through hole, and a center line corresponding to the second arcuate side plate is collinear with a center line of the third through hole. In a radial direction of the second through hole, a distance between the first arcuate side plate and an edge that is of the circuit board and that is at the second through hole is a first distance. In a radial direction of the third through hole, a distance between the second arcuate side plate and an edge that is of the circuit board and that is at the third through hole is a second distance. The second distance is equal to the first distance. In this way, a layout is reasonable, connection strength between the sealing hood and the circuit board can be ensured, and the area occupied by the sealing hood on the circuit board is reduced as much as possible, thereby helping to reduce the volume of the air flow cavity in the sealing hood, and increasing the peak frequency of the microphone.

In a possible implementation, the first distance and the second distance are greater than or equal to 0.2 millimeter and less than or equal to 0.5 millimeter. Specifically, the first distance and the second distance may be 0.2 millimeter, 0.3 millimeter, 0.4 millimeter, or 0.5 millimeter. In this way, the first distance and the second distance are moderate, and connection strength between the sealing hood and the circuit board and the peak frequency of the microphone can be considered at the same time.

In a possible implementation, the electronic device further includes a display, where the display has a back side, the housing is located on the back side of the display and is fastened to the display, and the stepped surface faces or faces away from the display.

In a possible implementation, the housing includes a frame and a back cover, the frame is located between the display and the back cover, and the frame is connected to the display and the back cover. The frame has an outer side surface. An end opening that is of the first through hole and that is communicated with the outer side of the housing is a second opening, and the second opening is located on the outer side surface. In this way, the first through hole is hidden on the outer side surface of the frame. When the electronic device is in use, the outer side surface of the frame is not easily seen by a user, and therefore, an appearance of the electronic device can be ensured.

In a possible implementation, the first through hole includes a first hole segment and a second hole segment, the first hole segment is disposed in the frame and extends in a thickness direction of the frame, the second hole segment is disposed on a part that is in the housing and that forms the stepped surface, the second hole segment extends in a thickness direction of the circuit board, one end of the first hole segment is communicated with one end of the second hole segment, one end that is of the first hole segment and that is away from the second hole segment forms the second opening, and one end that is of the second hole segment and that is away from the first hole segment forms the first opening. In this way, the first through hole extends along an L-shaped path, and the first through hole has a simple shape and low disposition difficulty.

In a possible implementation, the electronic device is a foldable mobile phone.

**BRIEF DESCRIPTION OF DRAWINGS**

FIG. 1 is a three-dimensional diagram of an electronic device according to some embodiments of this application;
FIG. 2 is a schematic diagram of an exploded structure of the electronic device shown in FIG. 1;
FIG. 3 is a schematic diagram of a cross-sectional structure of the electronic device shown in FIG. 1 in a direction A-A;
FIG. 4 is a schematic diagram of a structure when the electronic device shown in FIG. 3 is in a folded state;
FIG. 5 is a schematic diagram of another structure when the electronic device shown in FIG. 3 is in a folded state;
FIG. 6 is a schematic diagram of a cross-sectional structure of the electronic device shown in FIG. 1 in a direction B-B;
FIG. 7 is a schematic diagram of a cross-sectional structure of an electronic device according to still some embodiments of this application;
FIG. 8 is a schematic diagram of a cross-sectional structure of an electronic device according to still some embodiments of this application;
FIG. 9 is a diagram of a frequency response curve of a microphone in the electronic device shown in FIG. 8;
FIG. 10 is a front view of a sealing hood in the electronic device shown in FIG. 8;
FIG. 11 is a bottom view of the sealing hood shown in FIG. 10;
FIG. 12 is a bottom view of a circuit board in the electronic device shown in FIG. 8;
FIG. 13 is a schematic diagram of an assembly structure of the circuit board shown in FIG. 12 and the sealing hood shown in FIG. 11;
FIG. 14 is a schematic diagram of a cross-sectional structure of the assembly structure shown in FIG. 13 in a direction C-C;
FIG. 15 is a schematic diagram of a cross-sectional structure of an assembly structure of a circuit board and a sealing hood according to still some embodiments of this application;
FIG. 16 is a schematic diagram of a cross-sectional structure of an assembly structure of a circuit board and a sealing hood according to still some embodiments of this application; and
FIG. 17 is a schematic diagram of a cross-sectional structure of an electronic device according to still some embodiments of this application.

**DESCRIPTION OF EMBODIMENTS**

In the embodiments of this application, terms "first", "second", "third", "fourth", and "fifth" are merely used for description, and should not be understood as an indication or implication of relative importance or an implicit indication of a quantity of the indicated technical features. Therefore, a feature defined by "first", "second", "third", "fourth", and "fifth" may explicitly or implicitly include one or more features.

In the embodiments of this application, the term "include", "comprise", or any other variant thereof is intended to cover non-exclusive inclusion, so that a process, method, article, or apparatus that includes a series of elements not only includes those elements, but also includes other elements that are not explicitly listed, or includes elements inherent to such a process, method, article, or apparatus. Without further limitation, an element defined by the sentence "including a..." does not exclude existence of other identical elements in the process, method, article, or apparatus including the element.

In the embodiments of this application, unless otherwise specified, description of "parallel" represents that approximate parallel within a specific error range is allowed, and the error range may be a range in which a deviation angle is less than or equal to 5° relative to absolute parallel. Description of "perpendicular" represents that approximate perpendicular within a specific error range is allowed, and the error range may be a range in which a deviation angle is less than or equal to 5° relative to absolute perpendicular.

This application provides an electronic device. The electronic device is an electronic device with a microphone. Specifically, the electronic device includes but is not limited to a mobile phone, a tablet computer, a notebook computer, a desktop computer, a large-screen display device, an onboard device, and a smart wearable device. The smart wearable device includes but is not limited to a smartwatch, a wristband, smart glasses, and smart clothes.

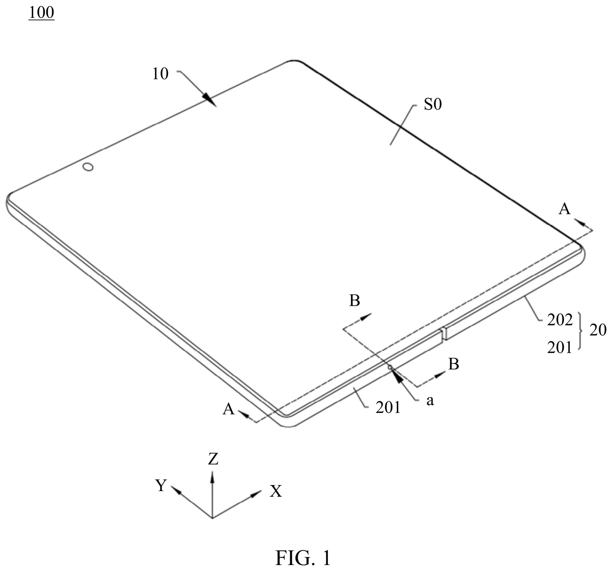

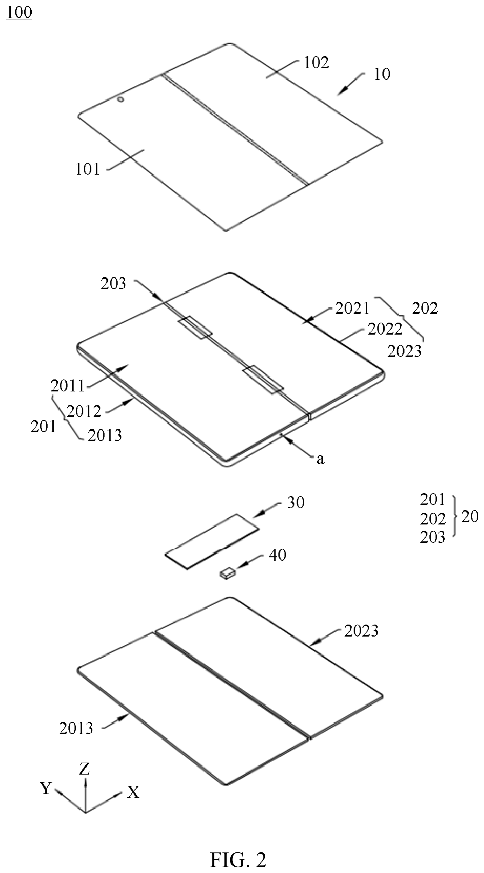

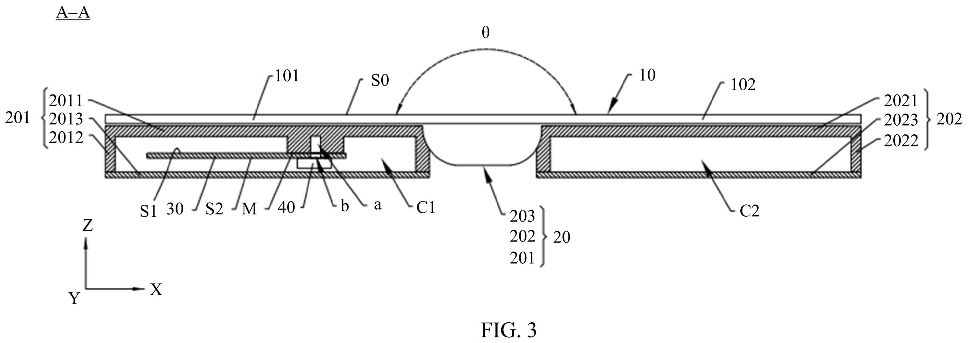

Refer to FIG. 1-FIG. 3. FIG. 1 is a three-dimensional diagram of an electronic device 100 according to some embodiments of this application; FIG. 2 is a schematic diagram of an exploded structure of the electronic device 100 shown in FIG. 1; and FIG. 3 is a schematic diagram of a cross-sectional structure of the electronic device 100 shown in FIG. 1 in a direction A-A. In this embodiment, an example in which the electronic device 100 is a foldable mobile phone is used for description. The electronic device 100 includes a display 10 and a housing 20.

It may be understood that FIG. 1-FIG. 3 schematically show some components included in the electronic device 100, but shapes and sizes of these components are not limited by FIG. 1-FIG. 3. In addition to these components, the electronic device 100 may further include electronic components such as a battery, a camera, a loudspeaker, and a vibration motor. In addition, the electronic device 100 may alternatively not include the display 10 when the electronic device 100 is another product.

The display 10 is configured to display information such as an image and a video. The display 10 may be an organic light-emitting diode (organic light-emitting diode, OLED) screen, a micro organic light-emitting diode (micro organic light-emitting diode) screen, a quantum dot light-emitting diode (quantum dot light emitting diode, QLED) screen, a liquid crystal display (liquid crystal display, LCD), or the like.

The display 10 includes a display surface S0, and a user may view, by using the display surface S0, an image or a video displayed on the display 10. The display 10 has a back side, and the back side is one side that is of the display 10 and that faces away from the display surface S0.

The housing 20 is located on the back side of the display 10, and is fastened to the display 10. The housing 20 is configured to support the display 10 and protect an internal electronic component.

In some embodiments, the housing 20 includes a first housing 201 and a second housing 202. When the electronic device 100 is another product, the electronic device 100 may alternatively not include the second housing 202, or may include, in addition to the first housing 201 and the second housing 202, a third housing, a fourth housing, a fifth housing, or the like. This is not specifically limited in this application.

The first housing 201 and the second housing 202 are configured to support the display 10. Specifically, mainly refer to FIG. 2 and FIG. 3. The display 10 includes a first display part 101 and a second display part 102. The first housing 201 supports the first display part 101, and the second housing 202 supports the second display part 102.

Mainly refer to FIG. 2 and FIG. 3. The first housing 201 includes a first middle plate 2011, a first frame 2012, and a first back cover 2013. The first frame 2012 is disposed at an edge of the first middle plate 2011. The first back cover 2013 is located on one side that is of the first middle plate 2011 and that faces away from the first display part 101, and is fastened to the first frame 2012. Specifically, the first back cover 2013 may be fastened to the first frame 2012 by using an adhesive, or may be integrally formed with the first frame 2012. Mainly refer to FIG. 3. The first middle plate 2011, the first frame 2012, and the first back cover 2013 enclose a first accommodating cavity C1. A structure including the first middle plate 2011 and the first frame 2012 may be referred to as a first middle frame or a first front housing. In addition, in another embodiment, the first housing 201 may alternatively not include the first middle plate 2011.

Similarly, still refer to FIG. 2 and FIG. 3. The second housing 202 includes a second middle plate 2021, a second frame 2022, and a second back cover 2023. The second frame 2022 is disposed at an edge of the second middle plate 2021. The second back cover 2023 is located on one side that is of the second middle plate 2021 and that faces away from the second display part 102, and is fastened to the second frame 2022. Specifically, the second back cover 2023 may be fastened to the second frame 2022 by using an adhesive, or may be integrally formed with the second frame 2022. Mainly refer to FIG. 3. The second middle plate 2021, the second frame 2022, and the second back cover 2023 enclose a second accommodating cavity C2. A structure including the second middle plate 2021 and the second frame 2022 may be referred to as a second middle frame or a second front housing. In addition, in another embodiment, the second housing 202 may alternatively not include the second middle plate 2021.

The first accommodating cavity C1 and the second accommodating cavity C2 are configured to accommodate electronic components such as a battery, a vibration motor, a loudspeaker module, and a camera module.

In some embodiments, at least one of the first back cover 2013 and the second back cover 2023 may alternatively be replaced with a display, and the display may be specifically an LCD.

Refer to FIG. 2 and FIG. 3. The housing 20 further includes a rotating shaft mechanism 203. The first housing 201 and the second housing 202 may be rotatably connected by using the rotating shaft mechanism 203, so that the display 10 can be folded into a folded state from an unfolded state, as shown in FIG. 1-FIG. 3.

When the display 10 is in the unfolded state, mainly refer to FIG. 3. An included angle θ between the first display part 101 and the second display part 102 on a display side is approximately 180 degrees (°), so that large-screen display can be implemented, thereby providing a user with richer information, and bringing the user better use experience. The display side is a side that the display surface of the display 10 faces. When the display 10 is in the unfolded state and operating, the user may view the image or the video displayed on the display 10 from the display side.

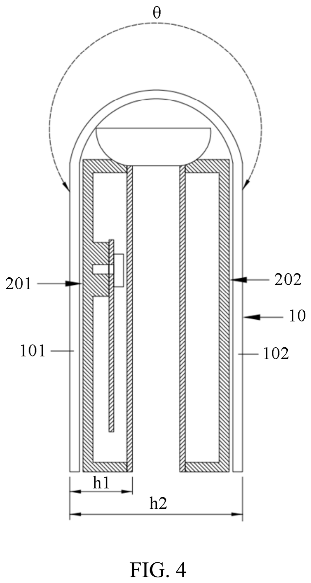

When the display 10 is in the folded state, refer to FIG. 4. FIG. 4 is a schematic diagram of a structure when the electronic device 100 shown in FIG. 3 is in a folded state. The included angle θ may be approximately 360°, that is, the electronic device 100 is an outward foldable mobile phone.

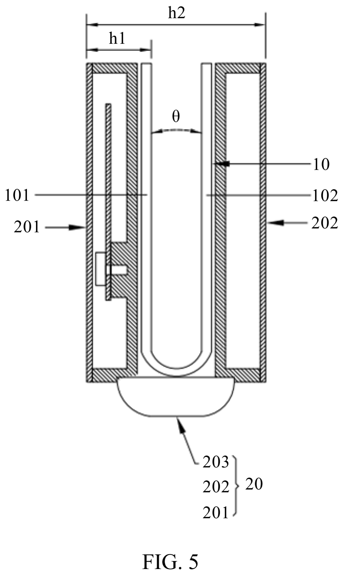

When the display 10 is in the folded state, refer to FIG. 5. FIG. 5 is a schematic diagram of another structure when the electronic device 100 shown in FIG. 3 is in a folded state. The included angle θ may alternatively be approximately 0°, that is, the electronic device 100 is an inward foldable mobile phone.

In this way, the foldable mobile phone has a small size, and is easy to carry.

When the display 10 is in the unfolded state, a thickness of a foldable display device is a first thickness h1; and when the display 10 is in the folded state, a thickness of the foldable display device is a second thickness h2. The second thickness h2 is greater than or equal to twice the first thickness h1.

Based on this, to improve portability and tactile experience, there are increasing efforts to thin the foldable display device in the unfolded state, to reduce the thickness in the folded state.

On the foregoing basis, refer back to FIG. 2 and FIG. 3. The electronic device 100 further includes a circuit board 30 and a microphone 40. The circuit board 30 and the microphone 40 are disposed in the housing 20.

In some embodiments, mainly refer to FIG. 3. The circuit board 30 and the microphone 40 may be disposed in the first housing 201. Specifically, the circuit board 30 and the microphone 40 may be disposed in the first accommodating cavity C1 of the first housing 201.

Certainly, in another embodiment, the circuit board 30 and the microphone 40 may alternatively be disposed in the second housing 202. This embodiment and the following embodiments are described by using an example in which the circuit board 30 and the microphone 40 are disposed in the first housing 201. This cannot be considered as a special limitation on this application.

An appearance of the first housing 201 is roughly a rectangular flat plate. Based on this, for ease of description of the following embodiments, an XYZ coordinate system is established for the first housing 201. Specifically, a width direction of the first housing 201 is defined as an X-axis direction, a length direction of the first housing 201 is defined as a Y-axis direction, and a thickness direction of the first housing 201 is defined as a Z-axis direction. Certainly, for the first housing 201, there may be another establishment manner for the XYZ coordinate system. This is not specifically limited herein.

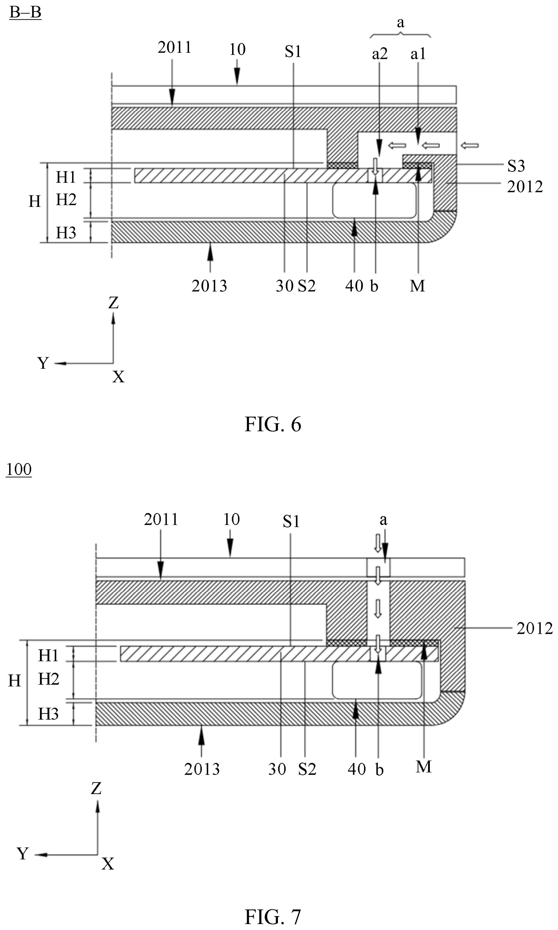

Refer to FIG. 3 and FIG. 6. FIG. 6 is a schematic diagram of a cross-sectional structure of the electronic device shown in FIG. 1 in a direction B-B. An inner wall surface of the first housing 201 includes a stepped surface M.

In some embodiments, refer to FIG. 6. The stepped surface M may face away from the display 10. Specifically, the stepped surface M may be a plane, and the stepped surface M is parallel to an XY plane. In some other embodiments, the stepped surface M may alternatively be inclined relative to the XY plane. In still some other embodiments, the stepped surface M may alternatively be a curved surface. This is not specifically limited herein.

The stepped surface M is configured to fasten the circuit board 30. Specifically, the circuit board 30 may be fastened to the stepped surface M by using an adhesive, or may be fastened to the stepped surface M by using a structure such as a screw or a buckle. This is not specifically limited herein.

The circuit board 30 may be supported at a specific height by the stepped surface M, to prevent the circuit board 30 from being attached to the first middle plate 2011 or the first back cover 2013, and facilitate mounting of electronic components on two opposite surfaces of the circuit board 30, thereby increasing a quantity of electronic components integrated on the circuit board 30.

The circuit board 30 includes a first surface S1 and a second surface S2 that face away from each other. The first surface S1 faces the stepped surface M, and the second surface S2 faces away from the stepped surface M.

In some embodiments, the first surface S1 and the second surface S2 may be two surfaces with largest areas in all surfaces of the circuit board 30. The circuit board 30 may include a multi-layer stacked structure formed by an insulation dielectric layer and a metal layer that are alternately stacked in sequence. The metal layer has a pattern used to form internal wiring or a reference ground of the circuit board 30. Based on this, the first surface S1 and the second surface S2 may be perpendicular to a stack direction of the insulation dielectric layer and the metal layer in the multi-layer stacked structure.

The microphone 40 is located on a side that the second surface S2 faces, that is, the microphone 40 and the stepped surface M are respectively located on two opposite sides of the circuit board 30. The microphone 40 is electrically connected to the circuit board 30, to implement interconnection with another electronic component by using the circuit board 30.

On the foregoing basis, a first through hole a is disposed on the housing 20, and the first through hole a is communicated with an inner side and an outer side of the housing 20. The first through hole a forms a sound pickup pipe of the microphone 40, and the microphone 40 picks up an external sound signal through the first through hole a.

In some embodiments, refer to FIG. 2 and FIG. 6. The first through hole a is disposed on the first housing 201, and is communicated with an inner side and an outer side of the first housing 201. Certainly, when the circuit board 30 and the microphone 40 are disposed in the second housing 202, the first through hole a may alternatively be disposed on the second housing 202, and communicated with an inner side and an outer side of the second housing 202. The following embodiments are described by using an example in which the first through hole a is disposed on the first housing 201 and communicated with the inner side and the outer side of the first housing 201. This cannot be considered as a special limitation on this application.

Specifically, still refer to FIG. 2 and FIG. 6. The first through hole a may be disposed on a lower frame segment of the first frame 2012 on the first housing 201. When the foldable mobile phone is in use, the lower frame segment faces the user and is close to the user, so that a sound signal of the user can be picked up more clearly. Certainly, in another embodiment, the first through hole a may alternatively be disposed on an upper frame segment or a left frame segment of the first frame 2012 on the first housing 201. This is not specifically limited herein.

"The upper frame segment of the first frame 2012" is a frame segment that is on the first frame 2012 and that is away from the user when the foldable mobile phone is in use. "The left frame segment of the first frame 2012" is a frame segment that is on the first frame 2012 and that is parallel to a rotation axis of the rotating shaft mechanism 203 and is away from the rotating shaft mechanism 203.

Certainly, when the first through hole a is disposed on the second housing 202, specifically, the first through hole a may be disposed on a lower frame segment, an upper frame segment, or a right frame segment of the second frame 2022.

This embodiment and the following embodiments are described by using an example in which the first through hole a is disposed on the lower frame segment of the first frame 2012. This cannot be considered as a special limitation on a position of the first through hole a.

An end opening that is of the first through hole a and that is communicated with an inner part of the first housing 201 is defined as a first opening, and an end opening that is of the first through hole a and that is communicated with the outer side of the first housing 201 is defined as a second opening.

In some embodiments, refer to FIG. 6. The first opening is located on the stepped surface M, and the second opening may be located on an outer side surface S3 of the lower frame segment of the first frame 2012. The outer side surface S3 of the lower frame segment is a surface that is of the lower frame segment and that faces away from the first accommodating cavity C1, and the outer side surface S3 of the lower frame segment forms a part of region of an appearance surface of the electronic device 100. To ensure an appearance of the electronic device 100 and structural strength of the lower frame segment, the second opening is usually located at a middle position of the outer side surface S3 of the lower frame segment in the Z-axis direction.

In some embodiments, mainly refer to FIG. 6. The first through hole a includes a first hole segment a1 and a second hole segment a2. The first hole segment a1 is disposed in the lower frame segment of the first frame 2012 and extends in a thickness direction of the lower frame segment (that is, the Z-axis direction). The second hole segment a2 is disposed on a part that is in the housing 20 and that forms the stepped surface M, and the second hole segment a2 extends in a thickness direction of the circuit board 30. One end of the first hole segment a1 is communicated with one end of the second hole segment a2. One end that is of the first hole segment a1 and that is away from the second hole segment a2 forms the second opening, and one end that is of the second hole segment a2 and that is away from the first hole segment a1 forms the first opening. In this way, the first through hole a extends along an L-shaped path, which can ensure the appearance of the electronic device 100. In addition, the first through hole a has a simple shape and low disposition difficulty.

Certainly, in some other embodiments, the first through hole a may alternatively extend along another path. This is not specifically limited herein. In still some other embodiments, refer to FIG. 7. FIG. 7 is a schematic diagram of a cross-sectional structure of the electronic device 100 according to still some embodiments of this application. In this embodiment, the first through hole a extends in the Z-axis direction and penetrates through the first front housing and the display 10. Such a structure is simple and easy to process, and has a good sound pickup effect.

Based on any one of the foregoing embodiments, refer to FIG. 6 or FIG. 7. A second through hole b is disposed on the circuit board 30, the second through hole b penetrates through the first surface S1 and the second surface S2 of the circuit board 30, and the second through hole b is opposite to and communicated with the first opening.

On the foregoing basis, the microphone 40 may include a substrate, a protective housing disposed on the substrate, and a sound pickup disposed on the substrate and located in the protective housing. The protective housing is configured to protect the sound pickup from water, dust, and electromagnetic interference. The microphone 40 is configured to be electrically connected to the circuit board 30 by using the substrate. Specifically, a first pad may be disposed on a surface that is of the substrate and that faces away from the sound pickup, and the first pad is electrically connected to the sound pickup; and a second pad may be disposed on the circuit board 30. The surface that is of the substrate and that faces away from the sound pickup faces the circuit board 30, and the first pad is welded to the second pad. The microphone 40 has a sound pickup hole. In some embodiments, the sound pickup hole is disposed on the substrate, that is, the microphone 40 is a bottom-port (BP) microphone. In the embodiments shown in FIG. 6 and FIG. 7, the sound pickup hole is opposite to and communicated with the second through hole b of the circuit board 30. The sound pickup may include a diaphragm. The diaphragm is opposite to the sound pickup hole. When there is a sound input through the sound pickup hole, the diaphragm may be driven to vibrate. A vibration amplitude and a vibration frequency of the diaphragm are collected to implement conversion of a sound signal to an electrical signal.

In this way, the sound signal (shown as arrows in FIG. 6 and FIG. 7) outside the electronic device 100 may be transmitted to the sound pickup in the microphone 40 sequentially through the first through hole a, the second through hole b, and the sound pickup hole, so that the sound signal is converted into the electrical signal by using the sound pickup, and the electrical signal is processed by using a signal processing circuit. A length of the sound pickup pipe is short, thereby helping to improve a sound pickup effect.

However, in a direction perpendicular to the circuit board 30, that is, in the Z-axis direction, a stack height of a part that is of the electronic device and that is located on a side that the stepped surface M faces is approximately a sum of a thickness H1 of the circuit board 30, a height H2 of the microphone 40, and a thickness H3 of the first back cover 2013, and the stack height is large. Therefore, an overall thickness of the electronic device in the unfolded state is large, which is not conducive to a thinning design of the electronic device.

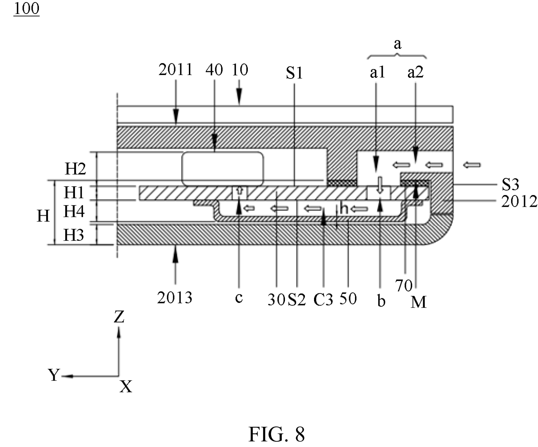

To resolve the foregoing problems, refer to FIG. 8. FIG. 8 is a schematic diagram of a cross-sectional structure of the electronic device 100 according to still some embodiments of this application. In this embodiment, in addition to the display 10, the housing 20, the circuit board 30, and the microphone 40 described in any one of the foregoing embodiments, the electronic device 100 further includes a sealing hood 50.

In the embodiment shown in FIG. 8, in addition to the second through hole b, the circuit board 30 further includes a third through hole c. The third through hole c is spaced apart from the second through hole b, and the third through hole c also penetrates through the first surface S1 and the second surface S2.

The sealing hood 50 is located on the side that the second surface S2 faces, that is, the sealing hood 50 and the stepped surface M are respectively located on the two opposite sides of the circuit board 30.

The sealing hood 50 and the circuit board 30 enclose an air flow cavity C3, and the air flow cavity C3 is communicated with the second through hole b and the third through hole c.

On the foregoing basis, the microphone 40 is located on a side that the first surface S1 faces, that is, the microphone 40 and the stepped surface M are located on a same side of the circuit board 30.

The microphone 40 has a sound pickup hole, and the sound pickup hole is opposite to and communicated with the third through hole c.

In this way, the first through hole a, the second through hole b, the air flow cavity C3, and the third through hole c form a U-shaped sound pickup pipe. The sound signal (shown as arrows in FIG. 8) outside the electronic device 100 may be transmitted to the microphone 40 through the U-shaped sound pickup pipe, to convert the sound signal into the electrical signal by using the microphone 40.

In addition, in the direction perpendicular to the circuit board 30, that is, in the Z-axis direction, the stack height H of the part that is of the electronic device and that is located on the side that the stepped surface M faces is approximately a sum of the thickness H1 of the circuit board 30, a height H4 of the sealing hood 50, and the thickness H3 of the first back cover 2013. A structure of the sealing hood 50 is simple, and the height H4 may be reduced, so that the stack height of this part of the electronic device can be reduced, thereby helping to reduce the overall thickness of the electronic device, and improving portability and tactile experience of the electronic device.

In addition, the microphone 40 and the sealing hood 50 are respectively disposed on the two opposite sides of the circuit board 30, to reduce stress of a part that is of the circuit board and that is configured to fasten the microphone 40. In addition, the U-shaped sound pickup pipe may reduce an impact of an acoustic wave air flow on the diaphragm in the microphone 40.

It should be noted that, in the foregoing embodiment, a shape and a deposition position of the first through hole a may be the same as a shape and a deposition position of the first through hole a described in any one of the foregoing embodiments. In the embodiment shown in FIG. 8, an example in which the shape and the disposition position of the first through hole a are the same as the shape and the disposition position of the first through hole a in the electronic device 100 shown in FIG. 6 is used for description. This cannot be considered as a special limitation on this application.

In some embodiments, still refer to FIG. 8. The height H4 of the sealing hood 50 is less than the height H2 of the microphone 40 in the direction perpendicular to the circuit board 30, that is, in the Z-axis direction. In this way, the stack height H of the part that is of the electronic device and that is located on the side that the stepped surface M faces can be reduced. Specifically, a benefit value of the stack height H is approximately a difference between the height H2 of the microphone 40 and the height H4 of the sealing hood 50, thereby helping to reduce the overall thickness of the electronic device, and improving portability and tactile experience of the electronic device.

In some embodiments, still refer to FIG. 8. The height H4 of the sealing hood 50 is greater than or equal to 0.4 millimeter (mm) and less than or equal to 0.9 mm in the direction perpendicular to the circuit board 30. Specifically, the height H4 of the sealing hood 50 may be 0.4 mm, 0.5 mm, 0.6 mm, 0.7 mm, 0.8 mm, or 0.9 mm. In this way, the height H4 of the sealing hood 50 is moderate, so that the overall thickness can be reduced.

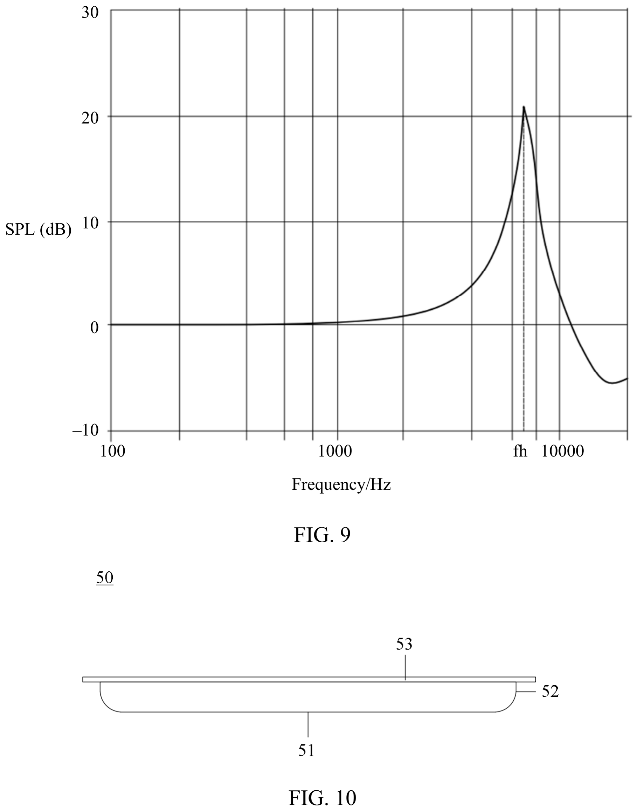

In another aspect, refer to FIG. 9. FIG. 9 is a diagram of a frequency response curve of the microphone 40 in the electronic device 100 shown in FIG. 8. It can be learned from the frequency response curve that the microphone 40 has a peak frequency th, where the peak frequency fh is a frequency point at which a sound pressure level (SPL) is optimal. A larger peak frequency fh indicates a higher operating frequency band of the microphone 40, and a highfrequency sound signal can be more clearly picked up.

The peak frequency fh of the microphone 40 is related to a volume, a length, and a cross-sectional area of the U-shaped sound pickup pipe. Specifically, a relationship expression between the peak frequency th and the volume V, the length 1, and the cross-sectional area S of the U-shaped sound pickup pipe is: $fh \propto \sqrt{S/(l*V)}$, where "∝" represents positive correlation.

Based on this, the height H4 of the sealing hood 50 is greater than or equal to 0.4 mm and less than or equal to 0.9 mm on the premise that a size of the first through hole a, a size of the second through hole b, and a size of the third through hole c are fixed. A height of the air flow cavity C3 in the Z-axis direction may be designed to be large, thereby helping to increase a cross-sectional area of the U-shaped sound pickup pipe at a position of the air flow cavity C3, and helping to increase the peak frequency th of the microphone 40.

In some embodiments, still refer to FIG. 8. A wall thickness h of the sealing hood 50 may be greater than or 0.08 mm and less than or equal to 0.3 mm. Specifically, the wall thickness h of the sealing hood 50 may be 0.08 mm, 0.1 mm, 0.15 mm, 0.18 mm, 0.2 mm, 0.25 mm, 0.28 mm, or 0.3 mm. In this way, structural strength of the sealing hood 50 can be ensured. In addition, the height of the air flow cavity C3 inside the sealing hood 50 may be designed to be large in the Z-axis direction on the premise that the height H4 of the sealing hood 50 is fixed, thereby helping to increase the peak frequency fh of the microphone 40.

In some embodiments, still refer to FIG. 8. A volume of the air flow cavity C3 is greater than or equal to 3 cubic millimeters (mm³) and less than or equal to 10 mm³. Specifically, the volume of the air flow cavity C3 may be 3 mm³, 4 mm³, 5 mm³, 6 mm³, 7 mm³, 8 mm³, 9 mm³, or 10 mm³. In this way, the volume of the air flow cavity C3 is moderate. The second through hole b and the third through hole c can be simultaneously covered on the premise that the height of the air flow cavity C3 is fixed. In addition, the volume of the air flow cavity C3 is relatively small, so that a volume of the U-shaped sound pickup pipe is small, thereby helping to increase the peak frequency fh of the microphone 40.

In some embodiments, a material of the sealing hood 50 may be metal. Specifically, the metal includes but is not limited to iron, iron alloy, copper, copper alloy, aluminum, or aluminum alloy. The metal has large hardness, so that the wall thickness of the sealing hood 50 can be reduced on the premise that the structural strength of the sealing hood 50 is ensured. In this way, the height of the sealing hood 50 can be reduced on the premise that the height of the air flow cavity C3 is fixed, thereby facilitating thinning of the electronic device; or the height of the air flow cavity C3 can be increased on the premise that the height of the sealing hood 50 is fixed, thereby helping to increase the peak frequency fh of the microphone 40.

In another embodiment, the material of the sealing hood 50 may alternatively be plastic. Specifically, the plastic includes but is not limited to polycarbonate (polycarbonate, PC), PC+ glass fiber, and ABS plastic (acrylonitrile butadiene styrene plastic). Therefore, molding difficulty of the plastic is low, and a price is low, thereby helping to save costs.

The following embodiments are described on a basis that the material of the sealing hood 50 is metal. This cannot be considered as a special limitation on this application.

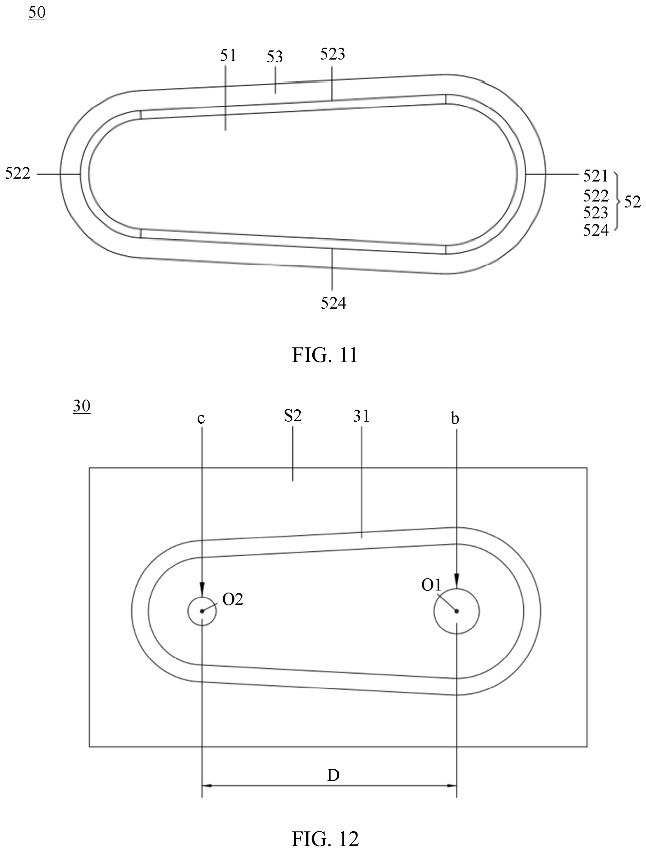

On the foregoing basis, the sealing hood 50 may be welded to the first surface S1 of the circuit board 30. Specifically, refer to FIG. 10 and FIG. 11. FIG. 10 is a front view of the sealing hood 50 in the electronic device 100 shown in FIG. 8, and FIG. 11 is a bottom view of the sealing hood 50 shown in FIG. 10. The sealing hood 50 includes a bottom plate 51, a side plate 52, and an annular connecting plate 53. The side plate 52 is disposed around an edge periphery of the bottom plate 51. The annular connecting plate 53 is connected to an edge periphery that is of the side plate 52 and that is away from the bottom plate 51.

In some embodiments, the side plate 52 may be perpendicular to the bottom plate 51, and the annular connecting plate 53 may be parallel to the bottom plate 51. In another embodiment, the side plate 52 and the annular connecting plate 53 may alternatively be inclined relative to the bottom plate 51. In this application, an example in which the side plate 52 is perpendicular to the bottom plate 51 and the annular connecting plate 53 is parallel to the bottom plate 51 is used for description. This cannot be considered as a special limitation on this application.

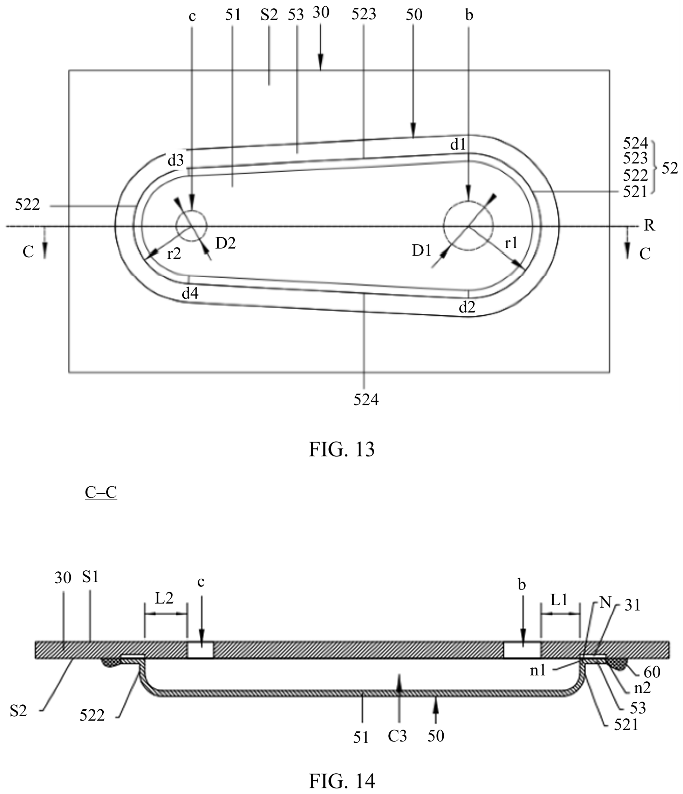

Refer to FIG. 12. FIG. 12 is a bottom view of the circuit board 30 in the electronic device 100 shown in FIG. 8. An annular connecting pad 31 is disposed on the second surface S2. Refer to FIG. 13 and FIG. 14. FIG. 13 is a schematic diagram of an assembly structure of the circuit board 30 shown in FIG. 12 and the sealing hood 50 shown in FIG. 11, and FIG. 14 is a schematic diagram of a cross-sectional structure of the assembly structure shown in FIG. 13 in a direction C-C. The annular connecting plate 53 is welded to the annular connecting pad 31.

In this way, the sealing hood 50 is fixedly con-

19 EP 4 645 837 A1 20

nected to the circuit board 30 through welding, and connection stability is high. In addition, a periphery of the annular connecting plate 53 can be welded to a periphery of the annular connecting pad 31, to implement sealing to some extent.

In addition, the first through hole a and the second through hole b may balance the air flow cavity C3 and an air pressure outside the electronic device 100, to avoid loose weld of the sealing hood 50 caused by heating air in the air flow cavity C3 in a process of welding the sealing hood 50 to the circuit board 30.

Specifically, the annular connecting plate 53 may be welded to the annular connecting pad 31 by using a surface mounted technology (surface mounted technology, SMT). In this way, welding efficiency can be improved and assembly costs can be reduced.

In some embodiments, the bottom plate 51, the side plate 52, and the annular connecting plate 53 may be formed integrally. Specifically, a metal stamping molding process or a casting process may be used to implement integrated molding. In another embodiment, the bottom plate 51, the side plate 52, and the annular connecting plate 53 may alternatively be separately formed and fixedly connected in a welding manner or the like. This is not specifically limited herein.

Refer to FIG. 14. The annular connecting plate 53 includes an inner edge n1 and an outer edge n2, where the inner edge n1 is disposed toward an opening region surrounded by the annular connecting plate 53, and the outer edge n2 is disposed away from the opening region surrounded by the annular connecting plate 53.

One end that is of the side plate 52 and that is away from the bottom plate 51 is defined as an opening end N. Based on this, optionally, refer to FIG. 14. The annular connecting plate 53 is located at a periphery of the opening end N, and the inner edge n1 is fastened to the opening end N. In this way, the structure of the sealing hood 50 is simple and is easy to form through stamping.

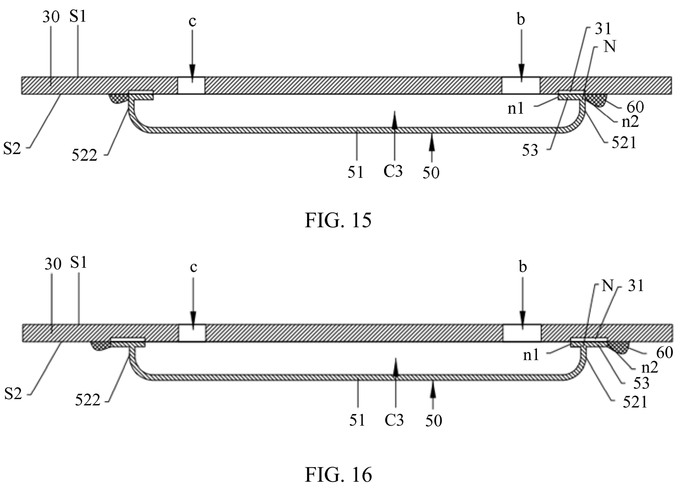

In another embodiment, refer to FIG. 15. FIG. 15 is a schematic diagram of a cross-sectional structure of an assembly structure of the circuit board 30 and the sealing hood 50 according to still some embodiments of this application. The annular connecting plate 53 is located in an opening surrounded by the opening end N, and the outer edge n2 is fastened to the opening end N. In this way, the annular connecting plate 53 can be closer to the second through hole b and the third through hole c on the premise that sizes of the bottom plate 51 and the side plate 52 are fixed, thereby improving, to some extent, structural strength of a region that is of the circuit board 30 and in which the second through hole b and the third through hole c are located.

In still some other embodiments, refer to FIG. 16. FIG. 16 is a schematic diagram of a cross-sectional structure of an assembly structure of the circuit board 30 and the sealing hood 50 according to still some embodiments of this application. A part of the annular connecting plate 53 is located on the periphery of the opening end N, a part of the annular connecting plate 53 is located in the opening surrounded by the opening end N, and a part that is of the annular connecting plate 53 and that is located between the inner edge n1 and the outer edge n2 is fastened to the opening end N.

Based on any one of the foregoing embodiments, refer to FIG. 14, FIG. 15, or FIG. 16. A first sealing material 60 is disposed on one side that is of the outer edge n2 and that is away from the inner edge n1, and the first sealing material 60 is in contact with the outer edge n2 and the circuit board 30. Specifically, the first sealing material 60 includes but is not limited to a sealant and a sealing tape. The sealant may be dispensed. In this way, the sealing hood 50 can be subjected to secondary sealing and reinforcement by using the first sealing material 60, to avoid leakage of air at a welded part between the sealing hood 50 and the circuit board 30 when the entire electronic device 100 falls off.

It should be noted that, in addition to the foregoing welding manner, a manner of connecting the sealing hood 50 to the circuit board 30 may be adhesive fastening, clamping fastening, or screw fastening. This is not specifically limited herein.

Refer back to FIG. 13. The second through hole b and the third through hole c are covered by the sealing hood 50, and the second through hole b and the third through hole c may be circular holes, elliptical holes, square holes, triangle holes, or the like. This embodiment and the following embodiments are described by using an example in which the second through hole b and the third through hole c are circular holes. Smoothness of transmission of the acoustic wave air flow in the circular holes is good, and a sound pickup effect of the microphone is good.

In some embodiments, refer to FIG. 13. A diameter D1 of the second through hole b is greater than a diameter D2 of the third through hole c. In this way, the diameter D1 of the second through hole b is large, and a cross-sectional area of the U-shaped sound pickup pipe at the second through hole b is large, thereby helping to increase the peak frequency fh of the microphone 40.

In some embodiments, the diameter D1 of the second through hole b may be greater than or equal to 0.5 mm and less than or equal to 1.5 mm. Specifically, the diameter D1 of the second through hole b may be 0.5 mm, 0.6 mm, 0.7 mm, 0.8 mm, 0.9 mm, 1.0 mm, 1.1 mm, 1.2 mm, 1.3 mm, 1.4 mm, or 1.5 mm.

In this way, the diameter D1 of the second through hole b is moderate, and a cross-sectional area of an air flow channel is large. In addition, because the sealing hood 50 covers the second through hole b, the diameter D1 of the second through hole b further affects an area occupied by the sealing hood 50 on the circuit board 30, thus affecting the volume of the air flow cavity C3 in the sealing hood 50. When the diameter D1 of the second through hole b is within this range, the diameter D1 of the second through hole b is moderate, the area occupied by the sealing hood 50 on the circuit board 30 is

11

moderate, and the volume of the air flow cavity C3 in the sealing hood 50 is moderate, thereby helping to increase the peak frequency fh of the microphone 40.

To ensure air tightness of the U-shaped sound pickup pipe, in some embodiments, refer back to FIG. 8. A projection of the second through hole b on the stepped surface M is located in the stepped surface M, and a second sealing material 70 is disposed between the stepped surface M and the circuit board 30. Specifically, the second sealing material 70 includes but is not limited to a sealant, a sealing tape, foam, a sealing ring, and a sealing gasket. The second sealing material 70 is disposed around peripheries of the first opening and the second through hole b. In this way, air tightness of a connection part between the circuit board 30 and the stepped surface M can be improved by using the second sealing material 70.

On the foregoing basis, still refer to FIG. 8. An orthographic projection of the third through hole c on the stepped surface M may be located outside the stepped surface M, a part of region of the stepped surface M is located between an orthographic projection of the second through hole b on the stepped surface M and the orthographic projection of the third through hole c on the stepped surface M. A width of this part of region in an arrangement direction of the second through hole b and the third through hole c affects air tightness of the second sealing material 70 to some extent. Based on this, to ensure sealing performance of the second sealing material 70, the width of this part of region in the arrangement direction of the second through hole b and the third through hole c should be designed to be large. However, this results in an increased distance between the second through hole b and the third through hole c, and further results in a large area occupied by the sealing hood 50 covering the second through hole b and the third through hole c, and a large volume of the air flow cavity C3 in the sealing hood 50, thus affecting the peak frequency fh of the microphone 40.

To resolve the foregoing problems, in some embodiments, refer to FIG. 12. A distance D between a center O1 of the second through hole b and a center O2 of the third through hole c is greater than or equal to 2 mm and less than or equal to 5 mm. Specifically, the distance D may be 2 mm, 3 mm, 4 mm, or 5 mm. In this way, a distance between the second through hole b and the third through hole c is moderate, and air tightness of the connection part between the stepped surface M and the circuit board 30 and the volume of the air flow cavity C3 can be considered at the same time, thereby helping to increase the peak frequency fh of the microphone 40.

To further increase the peak frequency fh of the microphone 40, in some embodiments, refer to FIG. 13. The side plate 52 includes a first arcuate side plate 521, a second arcuate side plate 522, a first transition plate 523, and a second transition plate 524.

The first arcuate side plate 521 is located on one side that is of the second through hole b and that is away from the third through hole c, and extends in a circumferential direction of the second through hole b. The second arcuate side plate 522 is located on one side that is of the third through hole c and that is away from the second through hole b, and extends in a circumferential direction of the third through hole c.

A radius r1 of the first arcuate side plate 521 is greater than a radius r2 of the second arcuate side plate 522.

On the foregoing basis, still refer to FIG. 13. Two ends of the first arcuate side plate 521 in the circumferential direction of the second through hole b are respectively a first end d1 and a second end d2, and two ends of the second arcuate side plate 522 in the circumferential direction of the third through hole c are respectively a third end d3 and a fourth end d4. A plane that passes through the center of the second through hole b and the center of the third through hole c and that is perpendicular to the circuit board 30 is defined as a reference plane R, the first end d1 and the third end d3 are located on one side of the reference plane R, and the second end d2 and the fourth end d4 are located on the other side of the reference plane R. The first transition plate 523 is connected between the first end d1 and the third end d3, and the second transition plate 524 is connected between the second end d2 and the fourth end d4.

In this way, a shape of the sealing hood is approximately a spindle shape, an internal space at one end of the spindle-shaped structure is large, and an internal space at the other end of the spindle-shaped structure is small. The end with the large internal space is communicated with the second through hole b with the large diameter, and the end with the small internal space is communicated with the third through hole c with the small diameter, thereby implementing a reasonable layout, reducing the volume of the air flow cavity C3 in the sealing hood 50, and helping to increase the peak frequency fh of the microphone 40.

It should be noted that a distance usually needs to be reserved between the first arcuate side plate 521 and an edge that is of the circuit board and that is at the second through hole b, and between the second arcuate side plate 522 and an edge that is of the circuit board and that is at the third through hole c, so that the sealing hood 50 is fastened to a region with high structural strength on the circuit board 30, thereby improving connection strength between the sealing hood 50 and the circuit board 30.

Based on this, in some embodiments, still refer to FIG. 13. A center line corresponding to the first arcuate side plate 521 is collinear with a center line of the second through hole b, and a center line corresponding to the second arcuate side plate 522 is collinear with a center line of the third through hole c.

Refer to FIG. 14, in a radial direction of the second through hole b, the distance between the first arcuate side plate 521 and the edge that is of the circuit board and that is at the second through hole b is a first distance L1. In a radial direction of the third through hole c, the distance between the second arcuate side plate 522 and the edge that is of the circuit board and that is at the third through hole c is a second distance L2.

The second distance L2 is equal to the first distance L1. It should be noted that, that the second distance L2 is equal to the first distance L1 is not limited to that the second distance L2 is absolutely equal to the first distance L1. When an absolute value of a difference between the second distance D2 and the first distance D1 is in a range of 0 mm-0.1 mm, it may be considered that the second distance L2 is equal to the first distance L1.

In this way, a layout is reasonable, connection strength between the sealing hood 50 and the circuit board 30 can be ensured, and the area occupied by the sealing hood 50 on the circuit board 30 is reduced as much as possible, thereby helping to reduce the volume of the air flow cavity C3 in the sealing hood 50, and increasing the peak frequency fh of the microphone 40.

In some embodiments, still refer to FIG. 14. The first distance L1 and the second distance L2 are greater than or equal to 0.2 mm and less than or equal to 0.5 mm. Specifically, the first distance L1 and the second distance L2 may be 0.2 mm, 0.3 mm, 0.4 mm, or 0.5 mm. In this way, the first distance L1 and the second distance L2 are moderate, and connection strength between the sealing hood 50 and the circuit board 30 and the peak frequency fh of the microphone 40 can be considered at the same time.

In the foregoing embodiment, the first transition plate 523 and the second transition plate 524 may be flat plates or curved plates. This is not specifically limited herein. In some embodiments, refer back to FIG. 13. The first transition plate 523 and the second transition plate 524 are flat plates, and an extension path of the first transition plate 523 from the first end d1 to the third end d3 is a first extension path. The first extension path is tangent to an extension path of the first arcuate side plate 521 in the circumferential direction of the second through hole b and an extension path of the second arcuate side plate 522 in the circumferential direction of the third through hole c. An extension path of the second transition plate 524 from the second end d2 to the fourth end d4 is a second extension path. The second extension path is tangent to an extension path of the first arcuate side plate 521 in the circumferential direction of the second through hole b and an extension path of the second arcuate side plate 522 in the circumferential direction of the third through hole c.

In this way, the side plate 52 has a simple structure and is easy to process, thereby helping to reduce costs.

In the electronic device 100 provided in the foregoing embodiments, referring to FIG. 8, the stepped surface M faces away from the display 10. In another embodiment, the stepped surface M may alternatively face the display 10.

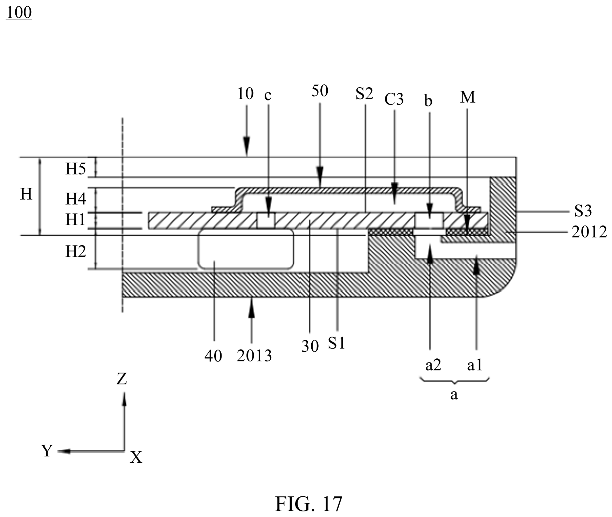

For example, refer to FIG. 17. FIG. 17 is a schematic diagram of a cross-sectional structure of the electronic device 100 according to still some embodiments of this application. In this embodiment, the stepped surface M faces the display 10, the first surface S1 of the circuit board 30 faces away from the display, and the second surface S2 faces the display 10. The sealing hood 50 is located between the circuit board 30 and the display 10, and the microphone 40 is located on one side that is of the circuit board 30 and that faces away from the display 10.

In this way, in the direction perpendicular to the circuit board 30, that is, in the Z-axis direction, the stack height H of the part that is of the electronic device and that is located on the side that the stepped surface M faces is approximately a sum of the thickness H1 of the circuit board 30, the height H4 of the sealing hood 50, and a thickness H5 of the display 10. The structure of the sealing hood 50 is simple, and the height H4 may be reduced, so that the stack height of this part of the electronic device can be reduced, thereby helping to reduce the overall thickness of the electronic device, and improving portability and tactile experience of the electronic device.

In the descriptions of this specification, specific features, structures, materials, or characteristics may be properly combined in any one or more embodiments or examples.

Finally, it should be noted that the foregoing embodiments are only used to describe the technical solutions in this application, but are not used to limit this application. Although this application has been described in detail with reference to the foregoing embodiments, it should be understood by a person of ordinary skill in the art that the technical solutions described in the foregoing embodiments may still be modified, or some technical features thereof may be equivalently replaced. These modifications or replacements do not make the essence of the corresponding technical solutions depart from the spirit and scope of the technical solutions in the embodiments of this application.

**Claims**

1. An electronic device, comprising:

a housing, wherein an inner wall surface of the housing comprises a stepped surface, a first through hole is disposed on the housing, the first through hole is communicated with an inner side and an outer side of the housing, an end opening that is of the first through hole and that is communicated with the inner side of the housing is a first opening, and the first opening is located on the stepped surface;
a circuit board, wherein the circuit board is located in the housing and is fastened to the stepped surface, the circuit board comprises a first surface and a second surface that face away from each other, the first surface faces the stepped surface, the second surface faces away from the stepped surface, a second through hole and a third through hole are disposed on the circuit board, the second through hole is opposite to and communicated with the first opening, and the third through hole is spaced apart from the second through hole;

a sealing hood, wherein the sealing hood is located on a side that the second surface faces, the sealing hood and the circuit board enclose an air flow cavity, and the air flow cavity is communicated with the second through hole and the third through hole;

a microphone, wherein the microphone is located on a side that the first surface faces, the microphone has a sound pickup hole, and the sound pickup hole is opposite to and communicated with the third through hole.

2. The electronic device according to claim 1, wherein a height of the sealing hood is less than a height of the microphone in a direction perpendicular to the circuit board.

3. The electronic device according to claim 1 or 2, wherein the height of the sealing hood is greater than or equal to 0.4 millimeter and less than or equal to 0.9 millimeter in the direction perpendicular to the circuit board.

4. The electronic device according to claim 3, wherein a wall thickness of the sealing hood is greater than or equal to 0.08 millimeter and less than or equal to 0.3 millimeter.

5. The electronic device according to any one of claims 1-4, wherein a volume of the air flow cavity is greater than or equal to 3 cubic millimeters and less than or equal to 10 cubic millimeters.

6. The electronic device according to any one of claims 1-5, wherein a material of the sealing hood is metal.

7. The electronic device according to claim 6, wherein the sealing hood comprises a bottom plate, a side plate, and an annular connecting plate; and
the side plate is disposed around an edge periphery of the bottom plate, the annular connecting plate is connected to an edge periphery that is of the side plate and that is away from the bottom plate, an annular connecting pad is disposed on the second surface, and the annular connecting plate is welded to the annular connecting pad.

8. The electronic device according to claim 7, wherein one end that is of the side plate and that is away from the bottom plate is an opening end, the annular connecting plate is located at a periphery of the opening end, the annular connecting plate comprises an inner edge, and the inner edge is connected to the opening end.

9. The electronic device according to claim 8, wherein the annular connecting plate further comprises an outer edge, a first sealing material is disposed on one side that is of the outer edge and that is away from the inner edge, and the first sealing material is in contact with the outer edge and the circuit board.

10. The electronic device according to any one of claims 7-9, wherein the second through hole and the third through hole are circular holes, and a diameter of the second through hole is greater than a diameter of the third through hole.

11. The electronic device according to claim 10, wherein the diameter of the second through hole is greater than or equal to 0.5 millimeter and less than or equal to 1.5 millimeters.

12. The electronic device according to claim 10 or 11, wherein a distance between a center of the second through hole and a center of the third through hole is greater than or equal to 2 millimeters and less than or equal to 5 millimeters.

13. The electronic device according to any one of claims 10-12, wherein the side plate comprises a first arcuate side plate, a second arcuate side plate, a first transition plate, and a second transition plate;

the first arcuate side plate is located on one side that is of the second through hole and that is away from the third through hole, and extends in a circumferential direction of the second through hole, the second arcuate side plate is located on one side that is of the third through hole and that is away from the second through hole, and extends in a circumferential direction of the third through hole, and a radius of the first arcuate side plate is greater than a radius of the second arcuate side plate;

two ends of the first arcuate side plate in the circumferential direction of the second through hole are respectively a first end and a second end, two ends of the second arcuate side plate in the circumferential direction of the third through hole are respectively a third end and a fourth end, a plane that passes through the center of the second through hole and the center of the third through hole and that is perpendicular to the circuit board is defined as a reference plane, the first end and the third end are located on one side of the reference plane, and the second end and the fourth end are located on the other side of the reference plane; and

the first transition plate is connected between the first end and the third end, and the second transition plate is connected between the second end and the fourth end.

14. The electronic device according to claim 13, wherein the first transition plate and the second transition plate are flat plates, an extension path of the first transition plate from the first end to the third end is a first extension path, and the first extension path is tangent to an extension path of the first arcuate side plate in the circumferential direction of the second through hole and an extension path of the second arcuate side plate in the circumferential direction of the third through hole; and

an extension path of the second transition plate from the second end to the fourth end is a second extension path, and the second extension path is tangent to the extension path of the first arcuate side plate in the circumferential direction of the second through hole and the extension path of the second arcuate side plate in the circumferential direction of the third through hole.

15. The electronic device according to claim 14, wherein a center line corresponding to the first arcuate side plate is collinear with a center line of the second through hole, and a center line corresponding to the second arcuate side plate is collinear with a center line of the third through hole;

in a radial direction of the second through hole, a distance between the first arcuate side plate and an edge that is of the circuit board and that is at the second through hole is a first distance, and in a radial direction of the third through hole, a distance between the second arcuate side plate and an edge that is of the circuit board and that is at the third through hole is a second distance; and

the second distance is equal to the first distance.

16. The electronic device according to claim 15, wherein the first distance and the second distance are greater than or equal to 0.2 millimeter and less than or equal to 0.5 millimeter.

17. The electronic device according to any one of claims 1-16, further comprising:
a display, wherein the display has a back side, the housing is located on the back side of the display and is fastened to the display, and the stepped surface faces or faces away from the display.

18. The electronic device according to claim 17, wherein the housing comprises a frame and a back cover, the frame is located between the display and the back cover, and the frame is connected to the display and the back cover; and

the frame has an outer side surface, an end opening that is of the first through hole and that is communicated with the outer side of the housing is a second opening, and the second opening is located on the outer side surface.

19. The electronic device according to claim 18, wherein the first through hole comprises a first hole segment and a second hole segment, the first hole segment is disposed in the frame and extends in a thickness direction of the frame, the second hole segment is disposed on a part that is in the housing and that forms the stepped surface, the second hole segment extends in a thickness direction of the circuit board, one end of the first hole segment is communicated with one end of the second hole segment, one end that is of the first hole segment and that is away from the second hole segment forms the second opening, and one end that is of the second hole segment and that is away from the first hole segment forms the first opening.

20. The electronic device according to any one of claims 1-19, wherein the electronic device is a foldable mobile phone.

100

FIG. 1

FIG. 2

A–A

FIG. 3

EP 4 645 837 A1

FIG. 4

FIG. 5

EP 4 645 837 A1

B–B

FIG. 6

100

FIG. 7

21

100

FIG. 8

FIG. 9

FIG. 10

50

FIG. 11

30

FIG. 12

FIG. 13

C–C

FIG. 14

FIG. 15

FIG. 16

100

FIG. 17

**TRANSLATION**

## INTERNATIONAL SEARCH REPORT

| International application No. |
|---|
| **PCT/CN2023/136785** |

**A. CLASSIFICATION OF SUBJECT MATTER**

H04M1/02(2006.01)i; H04R1/08(2006.01)i; G06F1/16(2006.01)i; H04R9/02(2006.01)i; H04R9/08(2006.01)i; H04M1/03(2006.01)i

According to International Patent Classification (IPC) or to both national classification and IPC

**B. FIELDS SEARCHED**

Minimum documentation searched (classification system followed by classification symbols)

IPC: H04R, H04M, G06F

Documentation searched other than minimum documentation to the extent that such documents are included in the fields searched

Electronic data base consulted during the international search (name of data base and, where practicable, search terms used)

CNTXT, ENTXTC, CNKI, 独秀, DUXIU: 手机, 电子设备, 平板, 导音, 麦克, 话筒, 密封, 密闭, 孔, microphone, phone, ipad, sound, metal, seal

**C. DOCUMENTS CONSIDERED TO BE RELEVANT**

| Category* | Citation of document, with indication, where appropriate, of the relevant passages | Relevant to claim No. |
|---|---|---|
| PX | CN 117135243 A (HONOR TERMINAL CO., LTD.) 28 November 2023 (2023-11-28) claims 1-20 | 1-20 |
| PX | CN 219875807 U (HONOR TERMINAL CO., LTD.) 20 October 2023 (2023-10-20) description, paragraphs [0043]-[0115], and figures 1-8 | 1-20 |
| X | CN 110166903 A (VIVO COMMUNICATION TECHNOLOGY CO., LTD.) 23 August 2019 (2019-08-23) description, paragraphs [0023]-[0059], and figure 1 | 1-5, 17-20 |
| Y | CN 110166903 A (VIVO COMMUNICATION TECHNOLOGY CO., LTD.) 23 August 2019 (2019-08-23) description, paragraphs [0023]-[0059], and figure 1 | 6-16 |
| Y | CN 106358101 A (YULONG COMPUTER TELECOMMUNICATION SCIENTIFIC (SHENZHEN) CO., LTD.) 25 January 2017 (2017-01-25) description, paragraphs [0024]-[0062], and figures 1-6 | 6-16 |

☑ Further documents are listed in the continuation of Box C.       ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**18 January 2024** | Date of mailing of the international search report<br><br>**31 January 2024** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br>Telephone No. |

Form PCT/ISA/210 (second sheet) (July 2022)

REVISED VERSION

**INTERNATIONAL SEARCH REPORT**

International application No.

**PCT/CN2023/136785**

### C.    DOCUMENTS CONSIDERED TO BE RELEVANT

| Category* | Citation of document, with indication, where appropriate, of the relevant passages | Relevant to claim No. |
|---|---|---|
| A | WO 2022265268 A1 (SAMSUNG ELECTRONICS CO., LTD.) 22 December 2022 (2022-12-22)<br>    entire document | 1-20 |
| A | CN 216673066 U (XI'AN WENTAI INFORMATION TECHNOLOGY CO., LTD.) 03 June 2022 (2022-06-03)<br>    entire document | 1-20 |
| A | CN 210518454 U (WUXI WENTAI INFORMATION TECHNOLOGY CO., LTD.) 12 May 2020 (2020-05-12)<br>    entire document | 1-20 |
| A | CN 214281613 U (VIVO COMMUNICATION TECHNOLOGY CO., LTD.) 24 September 2021 (2021-09-24)<br>    entire document | 1-20 |

Form PCT/ISA/210 (second sheet) (July 2022)

**INTERNATIONAL SEARCH REPORT**
Information on patent family members

International application No.

**PCT/CN2023/136785**

| Patent document<br>cited in search report | | | Publication date<br>(day/month/year) | Patent family member(s) | | | Publication date<br>(day/month/year) |
|---|---|---|---|---|---|---|---|
| CN | 117135243 | A | 28 November 2023 | None | | | |
| CN | 219875807 | U | 20 October 2023 | None | | | |
| CN | 110166903 | A | 23 August 2019 | None | | | |
| CN | 106358101 | A | 25 January 2017 | None | | | |
| WO | 2022265268 | A1 | 22 December 2022 | KR | 20220168794 | A | 26 December 2022 |
| | | | | US | 2022408170 | A1 | 22 December 2022 |
| CN | 216673066 | U | 03 June 2022 | None | | | |
| CN | 210518454 | U | 12 May 2020 | None | | | |
| CN | 214281613 | U | 24 September 2021 | None | | | |

Form PCT/ISA/210 (patent family annex) (July 2022)

**EP 4 645 837 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310148440